# EUROPEAN PATENT SPECIFICATION

(11) **EP 2 353 201 B1**
(45) Date of publication and mention of the grant of the patent: **24.07.2013**
(21) Application number: 09801465.7
(22) Date of filing: 28.10.2009
(51) Int. Cl.: H01M 8/04, G01N 27/00

(54) **MEASUREMENT ARRANGEMENT**
MESSANORDNUNG
DISPOSITIF DE MESURE

(30) Priority: 30.10.2008 FI 20086029
(43) Date of publication of application: 10.08.2011
(73) Proprietor: Convion Oy, 02150 Espoo (FI)
(72) Inventor: FONTELL, Erkko, FI-02200 Espoo (FI); NOPONEN, Matti, FI-02740 Espoo (FI)
(74) Representative: LEITZINGER OY
(86) International application number: PCT/FI2009/050862
(87) International publication number: WO 2010/049586

(56) References cited:
- WO-A1-2008/059888
- JP-A- 2002 352 842
- US-A- 5 538 620

## Description

### Field of the invention

Fuel cells are an example of devices using gaseous fuels containing carbon. Fuel cells are electrochemical devices supplied with reactants for producing electrical energy.

### State of the art

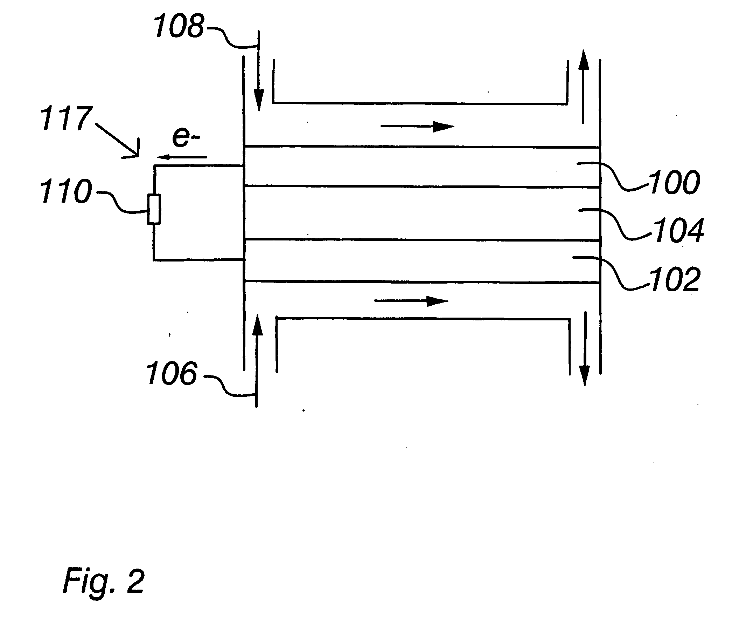

In figure 2 is presented a fuel cell comprising an anode side 100 and a cathode side 102 and an electrolyte 104 between them. The reactants fed to the fuel cell devices undergo a process in which electrical energy and water are produced as a result of an exothermal reaction. In solid oxide fuel cells (SOFCs), oxygen 106 fed to the cathode side receives an electron from the cathode, that is, oxygen is reduced to a negative oxygen ion which travels through the electrolyte to the anode where it combines with the fuel 108 used, producing water and carbon dioxide. Between the anode and the cathode is an external electric circuit 117 through which electrons e- are delivered to the cathode. The external electric circuit comprises a load 110.

Natural gases such as methane and gases containing higher carbon compounds are typically used as fuels in SOFCs, which gases, however, have to be preprocessed before feeding to the fuel cells to prevent formation of harmful carbon compounds such as for example coke, fly dust, tar, carbonate and carbide compounds. These different forms of carbon can be in this context called as general term being harmful carbon compounds. Hydrocarbons go through a thermal or catalytic decomposition in the formation of harmful carbon compounds. The produced compound can adhere to the surfaces of the fuel cell device and adsorbs on catalysts, such as nickel particles. The harmful carbon compound produced in coking coats some of the active surface of the fuel cell device, thus significantly deteriorating the reactivity of the fuel cell process. The harmful carbon compounds may even completely block the fuel passage.

Preventing formation of harmful carbon compounds is, therefore, important for ensuring a long service life for the fuel cells. The prevention of formation of harmful carbon compounds also saves catalysts, that is, the substances (nickel, platinum, etc) used in fuel cells for accelerating chemical reactions. Gas preprocessing requires water, which is supplied to the fuel cell device. The water produced in combining the oxygen ion and the fuel, that is, the gas on the anode may also be used in the preprocessing of the gas.

The object in gas preprocessing is to remove higher hydrocarbon compounds than CH-compound from the inlet gas of fuel cells, because hydrocarbon-compounds CxHyX, where x and y are numerical values, and x > 1, can react through pyrolysis or cracking to carbon or carbide parts.

The composition of the gas recirculated through the anode in feedback arrangement must be known with sufficient accuracy for the prior art preprocessing of the gas to be successful to prevent formation of harmful carbon compounds. In the preprocessing gas can be in gaseous and/or liquid form. Especially the oxygen/carbon (O/C) ratio, and to some extent also the hydrogen/carbon (H/C) ratio, must be controlled to avoid the riskiest reaction environment for carbon formation.

The problem with the prior art is that the preprocessing of the gas requires the use of a complex and costly online measuring arrangement, such as a gas chromatogram, for determining the constituents of the gas to be recirculated, in order to be able to ensure the execution of the preprocessing of the gas in an appropriate manner for the process.

The forming reactions of carbon, such as Boudouard-reaction (2 CO = C + CO2) and cracking reactions ( for example C2H4 + 3 Ni = Ni3C + CH4) have typically time gap from seconds to minutes before the reaction is noticeable from typical process features such as pressure, temperature, voltage or electrical current.

The forming reactions of harmful carbon compounds are non-reversible or only partly reversible. Thus the fuel cell device needs service operation or even a new fuel cell stack to replace a defective one after too much forming reactions of carbon.

### Short description of the invention

The object of the invention is to accomplish a measurement arrangement which is capable of detecting and following the forming of harmful carbon compounds early enough in a device using fuel containing carbon. This is achieved in a measurement arrangement for detecting solid forms of carbon and solid compounds of carbon for device using fuel containing carbon. The measurement arrangement comprises at least two electrodes having an essentially near distance between them, and fuel is arranged to flow between said electrodes, and at least one of said electrodes comprises essentially active material for formation of carbon and/or carbon compounds, an electrical circuit for activating an electrical potential between said electrodes, means for detecting electrical current when it exists between said electrodes, when an amount of carbon and/or carbon compounds reaches a yield value for the electrical current, which yield value is characteristic for the activated electrical potential and control means, when a need arises, for adapting the operation of said device according to the detected electrical current between said electrodes.

The object of the invention is also a method for detecting solid forms of carbon and solid compounds of carbon for a device using fuel containing carbon. In the method is disposed at least two electrodes so that they have an essentially near distance between them, and fuel is arranged to flow between said electrodes, and at least one of said electrodes comprises essentially active material for formation of carbon and/or carbon compounds, and an electrical potential is activated between said electrodes, and electrical current is detected when it exists between said electrodes, when an amount of carbon and/or carbon compounds reaches a yield value for the electrical current, which yield value is characteristic for the activated electrical potential and, when a need arises, the operation of said device is adapted according to the detected electrical current between said electrodes.

The invention is based on that in a device using fuel containing carbon is disposed at least two electrodes so that they have an essentially near distance between them, and at least one of said electrodes comprises essentially active material for formation of harmful carbon compounds, and an electrical potential is activated between said electrodes, and electrical current is detected when it exists between said electrodes, when an amount of carbon and/or carbon compounds reaches a yield value for the electrical current, which yield value is characteristic for the activated electrical potential and, when a need arises, the operation of said device is adapted according to the detected electrical current between said electrodes. In the invention is utilized that the formation of harmful carbon compound on the surface of the electrode changes electric current characteristics between the electrodes. Thus, on the basis of detecting current between the electrodes is determined the amount of harmful carbon compounds, which has been formed in the device.

The benefit of the invention is that in a device using fuel containing carbon can be noticed the formation of harmful carbon compounds early enough and thus problems because of harmful carbon compounds are successfully avoided.

### List of figures

Figure 1 presents a structure of a fuel cell device.
Figure 2 presents a structure of a single fuel cell.
Figure 3 presents a measurement arrangement according to the invention.

### Detailed description of the invention

Fuel cells are electrochemical devices which can be used to produce electrical energy with high duty ratio and in an environmentally friendly manner. Fuel cell technology is considered one of the most promising future forms of energy production.

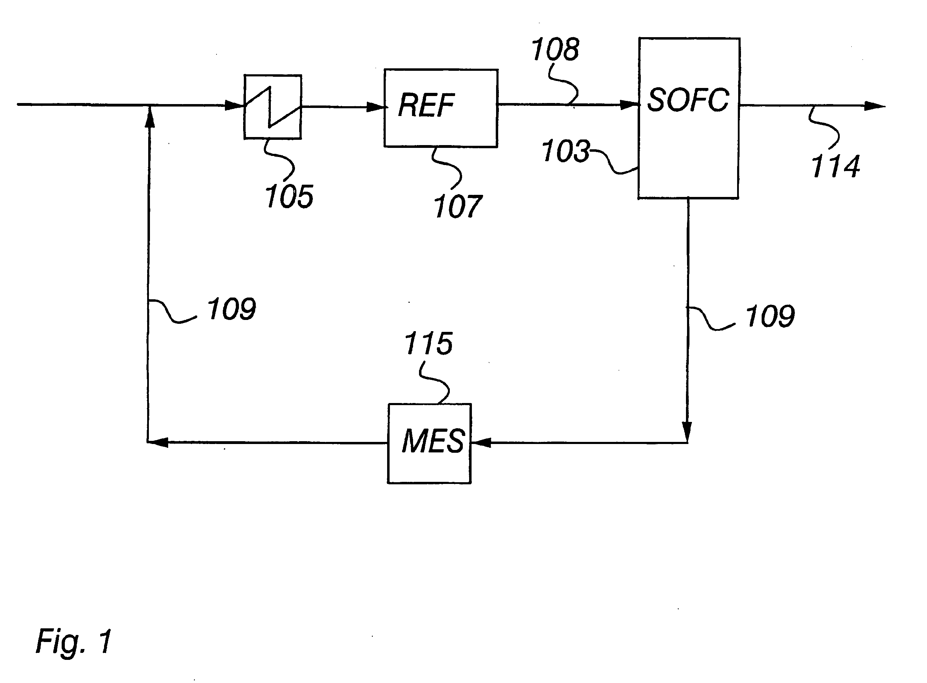

The preferred embodiment of the invention relates to a SOFC device, that is, a Solid Oxide Fuel Cell device. Figure 1 shows a SOFC device according to a preferred embodiment of the invention, which may utilise, for example, natural gas, biogas or methanol or other compounds containing hydrocarbons, as its fuel. The fuel cell device arrangement shown in figure 1 comprises platelike fuel cells, each fuel cell comprising an anode 100 and a cathode 102 as shown in Figure 2, and in Figure 1 the fuel cells are assembled in stack formation 103 (SOFC stack). The fuel is recirculated in feedback arrangement through the anode. Between the fuel cell anode and cathode is an electrolyte 104. To the cathode side 102 is supplied oxygen which receives an electron from the cathode, that is, is reduced to a negative oxygen ion, which travels through the electrolyte to the anode, where the oxygen ion combines with the fuel used and gives off water and carbon dioxide. Between the anode and the cathode is a separate passage 117, that is, an external electric circuit through which electrons, that is, an electric current, travels through the load 110 to the cathode.

The fuel cell device arrangement shown in Figure 1 comprises a fuel heat exchanger 105 and a reformer 107. Heat exchangers are used for controlling the heat balance of the fuel cell process and there may be several of them at different locations in the fuel cell device. The excess heat energy in the recirculated gas is recovered in the heat exchanger for use elsewhere in the fuel cell device or in an external heat recovery unit. The heat exchanger recovering the heat may thus be at a different location than that shown in Figure 1. The reformer is a device which converts fuel, such as natural gas, into a form suitable for fuel cells, that is, for example into a gas mixture containing one half of hydrogen and the rest methane, carbon dioxide and inert gases. The reformer is not, however, necessary in all fuel cell implementations, but untreated fuel may also be fed directly to the fuel cells 103.

Measurement means 115 (for example fuel flow meter, electric current meter and temperature meter) are used for anode recirculation fuel measurements, which are necessary for fuel cell device operation. Only a part of the fuel burned on the fuel cell 103 anodes 100 (figure 2) is recirculated through the anodes in a feedback arrangement and Figure 1, therefore, shows diagrammatically the exhaustion 114 of the remainder of the fuel from the anodes 100.

The main problem in SOFCs is the formation of solid-state carbons, high hydrocarbons such as tars and/or carbon containing carbide oxides and/or carbonates in the anode side of the fuel cell. Solid-state carbons, high hydrocarbons such as tars and/or carbon containing carbide oxides and/or carbonates can be in this context called as general term being harmful carbon compounds.

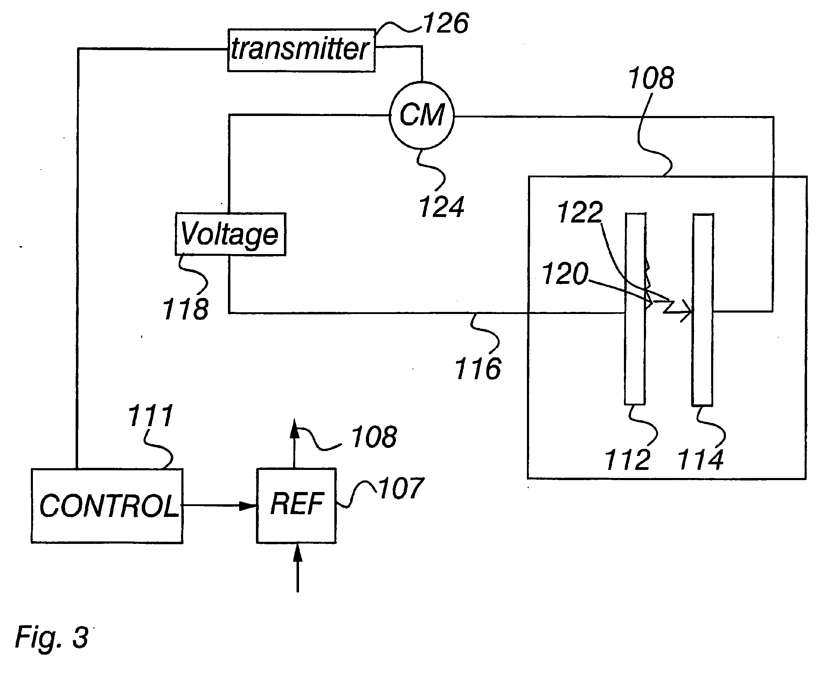

In figure 3 is presented a measurement arrangement according to the invention for detecting harmful carbon compounds at an early stage in a device using gaseous fuel containing carbon. According to the invention is accomplished a sensitive sensor for harmful carbon compounds, which sensor reacts within short response times, and the sensor is accomplished by disposing to the anode side the fuel flow at least two electrodes 112, 114 having a near distance between them, and fuel is arranged to flow between said electrodes. For clarity in figure 3 has been made bigger the relative distance between electrodes.

Electrodes 112, 114 (or at least one of them) are manufactured in a material that is active for formation reactions of harmful carbon compounds. Electrode material must also be electrically conductive. The electrodes are disposed at close distance of each other so that between them is not an electrical contact when surfaces of them are essentially clean. The electrodes can have for example planar-like (Figure 3) shapes, or tubular shapes. The electrodes, which are designed to have planar-like shapes, can be stacked electrodes disposed at close distances between them and the electrodes, which are designed to have tubular shapes, are disposed so that the first electrode is placed inside the second electrode at close distance to the second, that is, the uppermost electrode.

As Figure 3 presents the electrical circuit according to the invention is formed so that the electrodes 112, 114 are connected via wires 116 to an external power source 118 to form a potential difference between said electrodes. When carbon and/or carbide has not been developed on the surfaces of electrodes, electric current between the electrodes is zero or only a small loss current is detectable. When harmful carbon compounds develops on the surfaces of electrodes, the amount 120 of them reaches at a certain point a yield value of electrical current and between the electrodes is detected a sudden increase in electrical current due to a breakthrough 122, that is, a short-circuit 122 caused by harmful carbon compounds, which have been developed on the surfaces of the electrodes. At the next stage the amount of harmful carbon compounds on the electrode surfaces can be measured by monitoring the behaviour of electrical current between the electrodes. When the amount of harmful carbon compounds increases, also electric current between the electrodes increases.

As means for detecting and monitoring the electric current is used for example a current meter 124. Transmitter 126 sends a signal based on the detected electrical current to control means 111. If, based on the received signal, the control means notice such an amount of harmful carbon compounds, which should be taken into account in the fuel cell device operation, the control means provide a control signal for example to reformer 107, which pre-processes the anode fuel according to the detected amount of harmful carbon compounds. Control means 111 can also control the operation of other parts of the fuel cell device, such as for example the operation of the heat exchanger 105 and/or the feedback arrangement 109 (figure 1).

Such embodiment may also be more complex, such as implemented in such a way that with the current meter is integrated an automated control electronics, which comprises a transmitter 126 for transmitting, always when a need arises, a signal to the control means 111 of fuel cell process to take into account the amount of harmful carbon compounds in the fuel cell device operation. For example, an occurrence of a sudden increase in electric current in a breakthrough can also be monitored with a voltage meter, which monitors the voltage potential between the electrodes, because during the breakthrough is detected a sudden decrease of voltage potential between the electrodes, which means the breakthrough of electrical current between the electrodes has occurred.

An embodiment according to the invention can also be accomplished by disposing a switch to the electronic circuit. The switch can be implemented with one or more switch transistor, fuse or breaker. The switch is opened to an open position (non-conducting position), while an increased electrical current between the electrodes is detected. Then, the transmitter transmits for example a binary signal to the control means of fuel cell device, so that they react to the situation as required.

The measurement arrangement according to the invention can also comprise means for controlling the yield value of breakthrough between the electrodes caused by the harmful carbon compounds, that is, for controlling the yield value of electric current passage. These means comprise a range of options such as altering the distance between the electrodes 112, 114, or altering the voltage potential between the electrodes by setting it from the voltage source 118. These options may be used together or separately. By moving the electrodes to a closer distance, the breakthrough occurs already with a smaller amount of harmful carbon compounds. Similarly, by keeping the same distance between the electrodes and by increasing the voltage potential between the electrodes, the breakthrough takes place already in less amount of harmful carbon compounds.

The measuring arrangement according to the invention may comprise means for measuring an amount of harmful carbon compounds after the breakthrough by monitoring changes in electric current between the electrodes by using a current meter. For example, for the automated control electronics, integrated with the current meter 124, can be calculated model calculations, which corresponds to each used distance of electrodes. By comparing to these model calculations is found out what each change in electric current, in practice, means in the formation amount of harmful carbon compounds in the fuel cell device, and after this, the transmitter 126 transmits a signal needed to the control means 111, which control the operation of fuel cell device so that problems caused by an excessive formation of harmful carbon compounds are neglected. The said control electronics and control means can include for example computer implementations and they both can also be implemented into the same computer.

Above described sensor arrangement, which is sensitive for the formation of harmful carbon compounds, provides a possibility to achieve considerably faster response times than that, if the detections would be tried to seek from typical process characteristics such as pressure, temperature, voltage, and/or electric current. The rapid response times makes possible to change fuel cell device operation before irreversible formation of harmful compounds get too much to happen and the fuel cell device is thus kept under safety operating conditions.

Although above in reference to the attached figures has been presented the utilization of the measurement arrangement according to the invention in SOFC fuel cell device, it should be noted that, embodiments according to the invention are intended for the benefit of all the other devices and platforms, where the formation of harmful carbon compounds could cause a problem.

Although the invention has been presented in reference to the attached figures and specification, the invention is by no means limited to those, as the invention is subject to variations within the scope allowed for by the claims.

## Claims

1. Measurement arrangement for detecting solid forms of carbon and solid compounds of carbon for a device using fuel containing carbon, **characterized by**, that the measurement arrangement comprises at least two electrodes (112, 114) having an essentially near distance between them, and fuel is arranged to flow between said electrodes, and at least one of said electrodes comprises essentially active material for formation of carbon and/or carbon compounds, an electrical circuit (116, 118) for activating an electrical potential between said electrodes, means (124) for detecting electrical current when it exists between said electrodes, when an amount of carbon and/or carbon compounds reaches a yield value for the electrical current, which yield value is characteristic for the activated electrical potential and control means (111), when a need arises, for adapting the operation of said device according to the detected electrical current between said electrodes.

2. Measurement arrangement according to the claim 1, **characterized by**, that the measurement arrangement comprises means for controlling the yield value for the electrical current by changing the distance between said electrodes (112, 114).

3. Measurement arrangement according to the claim 1, **characterized by**, that the measurement arrangement comprises means (118) for controlling the yield value for the electrical current by changing the electrical potential between said electrodes (112, 114).

4. Measurement arrangement according to the claim 1, **characterized by**, that the measurement arrangement comprises means for measuring amount of solid-states of carbon and solid compounds of carbon by detecting changes in the electrical current between said electrodes (112, 114).

5. Measurement arrangement according to the claim 1, **characterized by**, that the measurement arrangement comprises a switch, which is switched on, when a substantial increasing in electrical current is detected between said electrodes (112, 114).

6. Method for detecting solid forms of carbon and solid compounds of carbon for a device using fuel containing carbon, **characterized by**, that in the method is disposed at least two electrodes (112, 114) so that they have an essentially near distance between them, and fuel is arranged to flow between said electrodes, and at least one of said electrodes comprises essentially active material for formation of carbon and/or carbon compounds, and an electrical potential is activated between said electrodes, and electrical current is detected when it exists between said electrodes, when an amount of carbon and/or carbon compounds reaches a yield value for the electrical current, which yield value is characteristic for the activated electrical potential and, when a need arises, the operation of said device is adapted according to the detected electrical current between said electrodes.

7. Method according to the claim 6, **characterized by**, that the yield value for the electrical current is controlled by changing the distance between said electrodes (112, 114).

8. Method according to the claim 6, **characterized by**, that the yield value for the electrical current is controlled by changing the electrical potential between said electrodes (112, 114).

9. Method according to the claim 6, **characterized by**, that amount of solid-states of carbon and solid compounds of carbon is measured by detecting changes in the electrical current between said electrodes (112, 114).

10. Method according to the claim 6, **characterized by**, that a switch is switched on, when a substantial increasing in electrical current is detected between said electrodes (112, 114).

## Patentansprüche

1. Messanordnung zum Erfassen fester Formen von Kohlenstoff und fester Verbindungen von Kohlenstoff für eine Einrichtung, die kohlenstoffhaltigen Treibstoff verwendet, **dadurch gekennzeichnet, dass** die Messanordnung Folgendes umfasst: wenigstens zwei Elektroden (112, 114), die einen im wesentlichen nahen Abstand zwischen sich haben, und der Treibstoff dafür eingerichtet ist, zwischen den Elektroden zu strömen, und wenigstens eine der Elektroden im Wesentlichen aktives Material zur Bildung von Kohlenstoff und/oder Kohlenstoffverbindungen umfasst, eine elektrische Schaltung (116, 118) zum Aktivieren eines elektrischen Potentials zwischen den Elektroden, Mittel (124) zum Erfassen eines elektrischen Stroms, wenn er zwischen den Elektroden vorhanden ist, wenn eine Menge an Kohlenstoff und/oder Kohlenstoffverbindungen einen Ertragswert für den elektrischen Strom erreicht, wobei der Ertragswert kennzeichnend ist für das aktivierte elektrische Potential, und Steuerungsmittel (111), wenn ein Bedarf entsteht, zum Anpassen des Betriebs der Einrichtung entsprechend dem erfassten elektrischen Strom zwischen den Elektroden.

2. Messanordnung nach Anspruch 1, **dadurch gekennzeichnet, dass** die Messanordnung Mittel zum Regeln des Ertragswertes für den elektrischen Strom durch das Verändern des Abstandes zwischen den Elektroden (112, 114) umfasst.

3. Messanordnung nach Anspruch 1, **dadurch gekennzeichnet, dass** die Messanordnung Mittel (118) zum Regeln des Ertragswertes für den elektrischen Strom durch das Verändern des elektrischen Potentials zwischen den Elektroden (112, 114) umfasst.

4. Messanordnung nach Anspruch 1, **dadurch gekennzeichnet, dass** die Messanordnung Mittel zum Messen der Menge von Kohlenstoff-Festkörpern und festen Kohlenstoffverbindungen durch das Erfassen von Veränderungen bei dem elektrischen Strom zwischen den Elektroden (112, 114) umfasst.

5. Messanordnung nach Anspruch 1, **dadurch gekennzeichnet, dass** die Messanordnung einen Schalter umfasst, der angeschaltet wird, wenn eine wesentliche Steigerung bei dem elektrischen Strom zwischen den Elektroden (112, 114) erfasst wird.

6. Verfahren zum Erfassen fester Formen von Kohlenstoff und fester Verbindungen von Kohlenstoff für eine Einrichtung, die kohlenstoffhaltigen Treibstoff verwendet, **dadurch gekennzeichnet, dass** bei dem Verfahren wenigstens zwei Elektroden (112, 114) so angeordnet werden, dass sie einen im wesentlichen nahen Abstand zwischen sich haben, und der Treibstoff dafür eingerichtet ist, zwischen den Elektroden zu strömen, und wenigstens eine der Elektroden im Wesentlichen aktives Material zur Bildung von Kohlenstoff und/oder Kohlenstoffverbindungen umfasst, und ein elektrisches Potential zwischen den Elektroden aktiviert wird und ein elektrischer Strom erfasst wird, wenn er zwischen den Elektroden vorhanden ist, wenn eine Menge an Kohlenstoff und/oder Kohlenstoffverbindungen einen Ertragswert für den elektrischen Strom erreicht, wobei der Ertragswert kennzeichnend ist für das aktivierte elektrische Potential, und, wenn ein Bedarf entsteht, der Betrieb der Einrichtung entsprechend dem erfassten elektrischen Strom zwischen den Elektroden angepasst wird.

7. Verfahren nach Anspruch 6, **dadurch gekennzeichnet, dass** der Ertragswert für den elektrischen Strom durch das Verändern des Abstandes zwischen den Elektroden (112, 114) geregelt wird.

8. Verfahren nach Anspruch 6, **dadurch gekennzeichnet, dass** der Ertragswert für den elektrischen Strom durch das Verändern des elektrischen Potentials zwischen den Elektroden (112, 114) geregelt wird.

9. Verfahren nach Anspruch 6, **dadurch gekennzeichnet, dass** die Menge von Kohlenstoff-Festkörpern und festen Kohlenstoffverbindungen durch das Erfassen von Veränderungen bei dem elektrischen Strom zwischen den Elektroden (112, 114) gemessen wird.

10. Verfahren nach Anspruch 6, **dadurch gekennzeichnet, dass** ein Schalter angeschaltet wird, wenn eine bedeutende Steigerung bei dem elektrischen Strom zwischen den Elektroden (112, 114) erfasst wird.

## Revendications

1. Dispositif de mesure pour la détection de formes solides de carbone et de composés carbonés solides pour un appareil utilisant un combustible contenant du carbone, **caractérisé en ce que** le dispositif de mesure comprend au moins deux électrodes (112, 114) éloignées d'une distance sensiblement réduite et le carburant circule entre lesdites électrodes, et **en ce qu'**au moins l'une desdites électrodes comprend une matière essentiellement active pour la formation de composés carbonés et / ou de carbone, un circuit électrique (116, 118) pour activer un potentiel électrique entre lesdites électrodes, des moyens (124) pour détecter le courant électrique pouvant exister entre lesdites électrodes, lorsqu'une quantité de carbone et / ou des composés carbonés atteint une valeur de courant électrique limite. Cette valeur est caractéristique du potentiel électrique et des moyens de contrôle actifs (111), lorsque le besoin se fait sentir, pour adapter le fonctionnement dudit dispositif au courant électrique détecté entre lesdites électrodes.

2. Dispositif de mesure selon la revendication 1, **caractérisé en ce que** le dispositif de mesure comprend des moyens de contrôle de la valeur limite du courant électrique en changeant la distance entre lesdites électrodes (112, 114).

3. Dispositif de mesure selon la revendication 1, **caractérisé en ce que** le dispositif de mesure comprend des moyens (118) de contrôle de la valeur limite du courant électrique en changeant le potentiel électrique entre lesdites électrodes (112, 114).

4. Dispositif de mesure selon la revendication 1, **caractérisé en ce que** le dispositif de mesure comprend des moyens de mesure de la quantité de carbone à l'état solide et de composés carbonés solides en détectant les variations du courant électrique entre lesdites électrodes (112, 114).

5. Dispositif de mesure selon la revendication 1, **caractérisé en ce que** le dispositif de mesure comprend un interrupteur activé lorsqu'une augmentation substantielle du courant électrique est détectée entre lesdites électrodes (112, 114).

6. Procédé pour la détection de formes solides de carbone et de composés solides en carbone pour un appareil utilisant un combustible contenant du carbone, **caractérisé en ce que** le dispositif de mesure comprend au moins deux électrodes (112, 114) éloignées d'une distance sensiblement réduite et le carburant circule entre lesdites électrodes, et **en ce qu'**au moins l'une desdites électrodes comprend une matière essentiellement active pour la formation de composés carbonés et / ou de carbone, un circuit électrique pour activer un potentiel électrique entre lesdites électrodes, des moyens pour détecter le courant électrique pouvant exister entre lesdites électrodes, lorsqu'une quantité de carbone et / ou des composés carbonés atteint une valeur de courant électrique limite. Cette valeur est caractéristique du potentiel électrique actif et, lorsque le besoin se fait sentir, le fonctionnement dudit dispositif est adapté au courant électrique détecté entre lesdites électrodes.

7. Procédé selon la revendication 6, **caractérisé en ce que** la valeur limite du courant électrique est contrôlée en modifiant la distance entre lesdites électrodes (112, 114).

8. Procédé selon la revendication 6, **caractérisé en ce que** la valeur limite du courant électrique est contrôlée en modifiant le potentiel électrique entre lesdites électrodes (112, 114).

9. Procédé selon la revendication 6, **caractérisé en ce que** la quantité de carbone à l'état solide et de composés carbonés solides est mesurée en détectant les variations du courant électrique entre lesdites électrodes (112, 114).

10. Procédé selon la revendication 6, **caractérisé en ce qu'**un commutateur est mis en marche, quand une augmentation essentielle du courant électrique est détectée entre lesdites électrodes (112, 114).
